# EUROPÄISCHE PATENTSCHRIFT

(11) **EP 4 069 409 B1**
(45) Veröffentlichungstag und Bekanntmachung des Hinweises auf die Patenterteilung: **27.09.2023**
(21) Anmeldenummer: 20817321.1
(22) Anmeldetag: 01.12.2020
(51) Int. Cl.: B01F 35/212, G01N 11/14, G01L 3/14, G01L 5/00

(54) **RÜHRGERÄT**
MIXER
MÉLANGEUR

(30) Priorität: 02.12.2019 DE 102019132715
(43) Veröffentlichungstag der Anmeldung: 12.10.2022
(73) Patentinhaber: IKA - Werke GmbH & Co. KG, 79219 Staufen (DE)
(72) Erfinder: STUDER, Severin, 79395 Neuenburg (DE)
(74) Vertreter: Mertzlufft-Paufler, Cornelius
(86) Internationale Anmeldenummer: PCT/EP2020/084170
(87) Internationale Veröffentlichungsnummer: WO 2021/110706

(56) Entgegenhaltungen:
- WO-A1-83/00101
- DE-A1- 2 850 486
- DE-A1- 4 401 679
- US-A- 3 800 597

## Beschreibung

Die Erfindung betrifft ein Rührgerät mit einem Gehäuse und mit einem in dem Gehäuse angeordneten Rührwerksantrieb.

Derartige Rührgeräte werden beispielsweise als sogenannte Überkopfrührer, als Viskosimeter oder auch als Dispergierer verwendet.

Je nach Anwendung kann es erforderlich sein, ein Drehmoment, das mit dem Rührwerksantrieb aufgebracht und in ein mit dem Rührgerät zu rührendes Medium eingeleitet wird, zu überwachen. Dazu sind am Markt verschiedene Konzepte vorbekannt.

So offenbart beispielsweise die Druckschrift DE 44 01 679 A1 ein Rührgerät mit einer Haltevorrichtung, mit einem Rührwerkzeug und mit einer Meßvorrichtung zum Messen des beim Rühren in das zu rührende Medium eingeleiteten Drehmomentes.

So kann das Drehmoment indirekt über die Strom-/Leistungsaufnahme des Rührwerksantriebs bestimmt werden. Hierbei wird aus der Stromaufnahme des Rührwerksantriebs das Drehmoment abgeleitet, das der Rührwerksantrieb in ein mit dem Rührgerät zu bearbeitendes Medium einbringt. Allerdings gibt es Anwendungsfälle, bei denen diese Art der indirekten Drehmomentmessung nicht ausreichend genau ist.

Ferner ist es bekannt, das Drehmoment mithilfe von Dehnmessstreifen zu bestimmen, die an einer Abtriebswelle des Rührgeräts angeordnet werden. Aus einer Belastung der Abtriebswelle kann das Drehmoment bestimmt werden. Diese Art der Drehmomentmessung ist zwar vergleichsweise genau, jedoch sind die Messsysteme, die zu dieser Art der Drehmomentbestimmung eingerichtet sind, vergleichsweise teuer.

Aufgabe der Erfindung ist es daher, ein Rührgerät der eingangs genannten Art bereitzustellen, das eine vergleichsweise günstige und genaue Drehmomentmessung ermöglicht.

Zur Lösung dieser Aufgabe wird das Rührgerät mit den Merkmalen des unabhängigen, auf ein derartiges Rührgerät gerichteten Anspruchs vorgeschlagen. Zur Lösung der Aufgabe wir somit insbesondere ein Rührgerät mit einem Gehäuse und mit einem in dem Gehäuse angeordneten Rührwerksantriebs vorgeschlagen, wobei der Rührwerksantrieb zum Messen eines von dem Rührwerksantrieb in ein zu rührendes Medium eingeleiteten Drehmoments um eine Schwenkachse innerhalb des Gehäuses schwenkbar gelagert und zumindest mittelbar entgegen zumindest einer Drehrichtung des Rührwerksantriebs abgestützt ist. Zur Erfassung einer Reaktionskraft dieser Abstützung weist das Rührgerät eine Messvorrichtung auf.

Beim Betrieb des Rührgeräts kann der innerhalb des Gehäuses schwenkbar gelagerte Rührwerksantrieb nach dem Prinzip "actio gleich reactio*"* verschwenkt werden und stützt sich innerhalb des Gehäuses des Rührgeräts ab. Die Reaktionskraft dieser Abstützung kann mithilfe der Messvorrichtung genau erfasst werden. Aus der Reaktionskraft der Abstützung lässt sich dann zumindest mittelbar auf das von dem Rührwerksantrieb aufgebrachte Drehmoment schließen. Es wurde festgestellt, dass diese Anordnung zur Bestimmung des Drehmoments, das mit dem Rührwerksantrieb in das zu rührende Medium eingeleitet wird, nicht nur vergleichsweise günstig, sondern darüber hinaus auch in zufriedenstellendem Maße genau ist.

Durch die Integration des Messprinzips in das Gehäuse des Rührgerätes erhält dieses einen vergleichsweise kompakten und gleichzeitig robusten Aufbau. So ist das Rührgerät besonders einfach zu handhaben.

Bei einer Ausführungsform des Rührgerätes ist vorgesehen, dass der schwenkbar gelagerte Rührwerksantrieb entgegen beider seiner beiden Drehrichtungen innerhalb des Gehäuses abgestützt ist. Die Messvorrichtung kann zur Erfassung von Reaktionskräften beider Abstützungen eingerichtet sein. Auf diese Weise kann das Drehmoment, das von dem Rührwerksantriebs aufgebracht und in ein zu rührendes Medium eingebracht wird, unabhängig davon bestimmt werden, in welcher seiner beiden Drehrichtungen der Rührwerksantrieb betrieben wird.

Die Messvorrichtung des Rührgeräts kann zumindest einen Kraftsensor aufweisen, mit dem die Reaktionskraft der zumindest einen Abstützung messbar ist. Vorzugsweise weist die Messvorrichtung zumindest einen Kraftsensor auf, mit dem die Reaktionskräfte beider Abstützungen messbar sind. Bei einer Ausführungsform des Rührgeräts kann der Rührwerksantrieb zumindest mittelbar gegen den zumindest einen Kraftsensor im Gehäuse abgestützt sein.

An dieser Stelle sei erwähnt, dass das Gehäuse, in dem der Rührwerksantrieb angeordnet ist, als Antriebsgehäuse des Rührgeräts bezeichnet werden kann.

Der Rührwerksantrieb kann zumindest mittelbar derart mit der Messvorrichtung, insbesondere mit dem zumindest einen Kraftsensor der Messvorrichtung, verbunden sein, dass Reaktionskräfte der Abstützungen des Rührwerksantriebs entgegen beider seiner Drehrichtungen erfassbar sind.

Bei einer bevorzugten Ausführungsform des Rührgeräts ist die Schwenkachse, um die der Rührwerksantrieb innerhalb des Gehäuses schwenkbar gelagert ist, deckungsgleich mit einer Rotationsachse einer Ausgangswelle des Rührgeräts. Bei dieser Variante des Rührgeräts kann zur Schwenklagerung des Rührwerksantriebs und zur Drehlagerung der Ausgangswelle des Rührgeräts eine gemeinsame Lagerung verwendet werden. Dies kann den konstruktiven Aufwand des Rührgeräts verringern.

Bei einer Ausführungsform des Rührgeräts ist die Schwenkachse, um die der Rührwerksantrieb schwenkbar gelagert ist, beabstandet, insbesondere parallel beabstandet oder windschief, zu einer Rotationsachse einer Ausgangswelle des Rührgeräts. Bei einer anderen Ausführungsform schneidet die Schwenkachse des Rührwerksantriebs eine Rotationsachse einer Ausgangswelle des Rührgeräts. Bei diesen Ausführungsformen kann das Rührgerät eine Lagerung, insbesondere eine Schwenklagerung, für den Rührwerksantrieb und eine separate Lagerung, insbesondere eine Drehlagerung, für die Ausgangswelle aufweisen.

Der Rührwerksantrieb kann so schwenkgelagert sein, dass die Schwenkachse des Rührwerksantriebs durch den Rührwerksantrieb verläuft. Bei dieser Ausführungsform kann das Rührgerät eine Lagerung für den Rührwerksantrieb, die dann als Schwenklagerung ausgebildet ist, und eine separate Lagerung für eine Ausgangswelle des Rührgeräts aufweisen. Der Rührwerksantrieb kann auch so schwenkgelagert sein, dass die Schwenkachse beabstandet, insbesondere parallel beabstandet oder windschief, zu einer Rotationsachse einer Abtriebswelle des Rührwerksantriebs ausgerichtet ist, oder dass die Schwenkachse eine Rotationsachse einer Abtriebswelle des Rührwerksantriebs schneidet.

Bei einer bevorzugten Ausführungsform des Rührgeräts kann der Rührwerksantrieb an einem, insbesondere um die Schwenkachse, schwenkbar gelagerten Haltearm innerhalb des Gehäuses angeordnet sein. Der Halterarm kann für einen Abstand zwischen der Schwenkachse und dem Rührwerksantrieb sorgen und dadurch die mit der Messeinrichtung bestimmbare Reaktionskraft verstärken.

Der zumindest eine Kraftsensor der Messvorrichtung kann so, vorzugsweise innerhalb des Gehäuses, angeordnet sein, dass der Rührwerksantrieb, sein Haltearm und/oder ein mit dem Rührwerksantrieb zumindest zeitweise verbundenes Kraftübertragungselement zumindest mittelbar gegen den zumindest einen Kraftsensor abstützbar ist.

Das Rührgerät kann eine Lagerung mit zumindest einem Lager zur schwenkbaren Lagerung des Rührwerksantriebs im Gehäuse aufweisen. Das zumindest eine Lager kann beispielsweise ein Gleitlager oder auch ein Wälzlager sein. Vorzugsweise umfasst die Lagerung zwei derartige Lager, mit denen das Rührgerät schwenkbar gelagert innerhalb des Gehäuses angeordnet ist.

Bei einer bevorzugten Ausführungsform des Rührgeräts wird die Lagerung zur Schwenklagerung des Rührwerksantriebs auch zur Drehlagerung einer Ausgangswelle des Rührgeräts verwendet. Hierbei können eine Rotationsachse der Ausgangswelle und die Schwenkachse des Rührwerksantriebs dann deckungsgleich sein. Bei dieser Ausführungsform übernimmt die Schwenklagerung des Rührwerksantriebs dann auch die Funktion der Drehlagerung der Ausgangswelle oder umgekehrt. Somit kann auf eine separate Lagerung für die Ausgangswelle des Rührgeräts beziehungsweise auf eine separate Lagerung für den Rührwerksantrieb verzichtet werden.

Ein, beispielsweise der zuvor bereits erwähnte, zumindest eine Kraftsensor der Messvorrichtung kann mit einem Sensorarm verbundenen sein und/oder einen Sensorarm aufweisen. Der Sensorarm kann als Kraftaufnehmer dienen, mit dem eine auf den Sensorarm ausgeübte Abstützkraft oder Reaktionskraft auf den Kraftsensor übertragen werden kann. Der Sensorarm kann zumindest eine Kontaktfläche zur Abstützung des schwenkbar gelagerten Rührwerksantriebs entgegen zumindest einer Drehrichtung des Rührwerksantriebs aufweisen. Auf diese Weise ist es möglich, den Kraftsensor beabstandet zu dem Rührwerksantrieb, vorzugsweise innerhalb des Gehäuses des Rührgeräts, vorzusehen.

Bei einer Ausführungsform des Rührgerätes ist einem, insbesondere dem bereits zuvor erwähnten zumindest einen, Kraftsensor der Messvorrichtung zumindest eine Kontaktfläche zur Abstützung des schwenkbar gelagerten Rührwerksantriebs entgegen beider Drehrichtungen des Rührwerksantriebs zugeordnet. Diese zumindest eine Kontaktfläche kann beispielsweise an dem Sensor angeordnet oder ausgebildet sein.

Bei einer Ausführungsform des Rührgerätes sind einem, insbesondere dem bereits zuvor erwähnten zumindest einen, Kraftsensor der Messvorrichtung zwei Kontaktfläche zur Abstützung des schwenkbar gelagerten Rührwerksantriebs entgegen beider Drehrichtungen des Rührwerksantriebs zugeordnet. Von diesen Kontaktflächen kann jeweils eine Kontaktfläche an einer von zwei unterschiedlichen, vorzugsweise einander entgegengesetzten oder abgewandten Seiten des Kraftsensors angeordnet oder ausgebildet sein.

Bei einer Ausführungsform des Rührgerätes ist ein, insbesondere der bereits zuvor erwähnte zumindest eine, Kraftsensor der Messvorrichtung mit einem Sensorarm verbunden, der zumindest eine Kontaktfläche zur Abstützung des schwenkbar gelagerten Rührwerksantriebs entgegen beider Drehrichtungen des Rührwerksantriebs aufweist.

Bei einer weiteren Ausführungsform des Rührgerätes ist ein, insbesondere der bereits zuvor erwähnte zumindest eine, Kraftsensor mit einem Sensorarm verbunden, der an zwei unterschiedlichen, vorzugsweise entgegengesetzten, Seiten jeweils eine Kontaktfläche aufweist, von denen jeweils eine zur Abstützung des Rührwerksantriebs entgegen einer seiner beiden Drehrichtungen vorgesehen ist und verwendet wird.

Der Rührwerksantrieb kann ein Kraftübertragungselement aufweisen oder mit einem Kraftübertragungselement verbunden sein, mit dem die zumindest eine Kontaktfläche des Sensorarms zu Abstützung entgegen zumindest einer Drehrichtung des Rührwerksantriebs kontaktierbar ist. Auf diese Weise kann ein Abstand zwischen dem Rührwerksantrieb einerseits und dem zumindest einen Kraftsensor der Messvorrichtung des Rührgerätes andererseits vergrößert werden, wodurch das Messprinzip hinsichtlich der Ausnutzung zur Verfügung stehenden Bauraums innerhalb des Gehäuses besonders flexibel ist.

Bei einer Ausführungsform weisen der Rührwerksantrieb und/oder ein, beispielsweise der zuvor bereits erwähnte Haltearm und/oder ein, beispielsweise das zuvor bereits erwähnte Kraftübertragungselement zumindest eine Abstützfläche auf, über die der Rührwerksantrieb innerhalb des Gehäuses zumindest mittelbar entgegen wenigstens einer seiner beiden Drehrichtungen abstützbar ist. Der Rührwerksantrieb kann als Elektromotor ausgebildet sein, der eine drehbar angetriebene Abtriebswelle aufweist. Die Abtriebswelle kann zumindest mittelbar mit einer Ausgangswelle des Rührgeräts verbunden sein.

Bei einer Ausführungsform des Rührgeräts kann die Abtriebswelle des Rührwerksantriebs als Ausgangswelle des Rührgeräts verwendet werden.

Als Kraftsensor kann ein Dehnmessstreifen, ein Drucksensor, ein piezoelektrischer Kraftsensor, ein piezoresistiver Kraftsensor, piezoelektrischer Drucksensor, ein kapazitiver Drucksensor, ein Schwingdrahtaufnehmer oder ein elektromagnetischer Druckwandler verwendet werden. Das Rührgerät kann beispielsweise als Überkopfrührer, als Viskosimeter oder auch als Dispergierer ausgebildet sein.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder in Kombination einzelner oder mehrerer Merkmale des Ausführungsbeispiels. Es zeigen in teilweise stark schematisierter Darstellung:

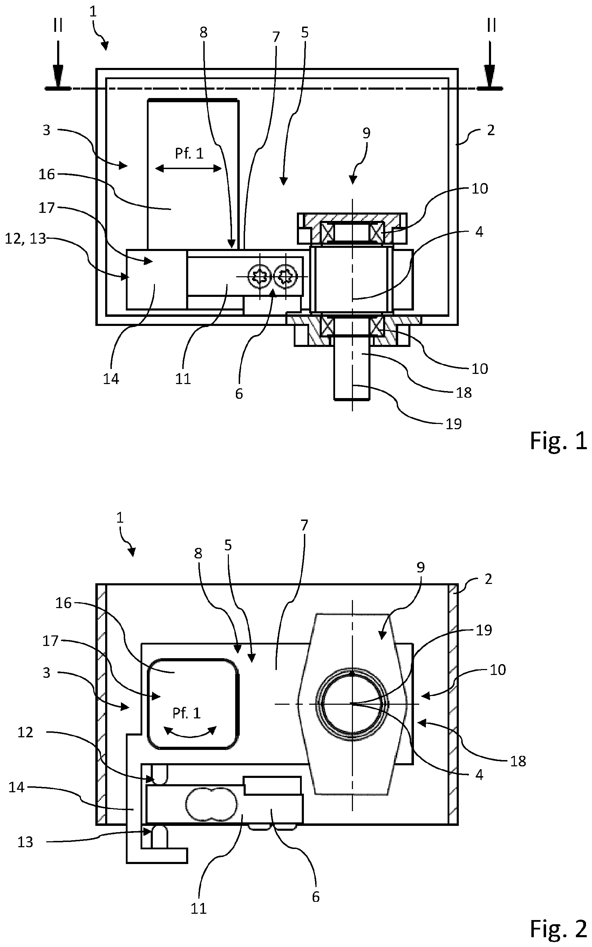

- Fig. 1:: eine Seitenansicht eines Rührgeräts mit einem Rührwerksantrieb, der in einem Gehäuse des Rührgeräts angeordnet und dort schwenkbar gelagert ist,
- Fig. 2:: eine entlang der in Figur 1 gezeigten Linie III-III geschnittene Ansicht des Rührgeräts mit darin drehbar gelagert angeordnetem Rührwerksantrieb,
- Fig. 3:: eine stark schematisierte Darstellung des Rührwerksantriebs hier schraffiert dargestellten möglichen Abstützflächen, über die der Rührwerksantrieb zur Erfassung der Reaktionskräfte zumindest mittelbar gegen einen Kraftsensor der Messvorrichtung des Rührgeräts abstützbar ist, sowie
- Fig. 4:: eine stark schematisierte Seitenansicht des Rührwerksantriebs mit seiner Lagerung, wobei hier mögliche Positionen eines mit einem Sensorarm verbundenen Kraftsensors abgebildet sind.

Sämtliche Figuren zeigen zumindest Teile eines im Ganzen mit 1 bezeichneten Rührgeräts. Das Rührgerät 1 weist ein Gehäuse 2 und einen innerhalb des Gehäuses 2 angeordneten Rührwerksantrieb 3 auf. Der Rührwerksantrieb 3 ist zur Bestimmung eines von dem Rührwerksantrieb 3 in ein zu rührendes Medium eingeleiteten Drehmoments um eine Schwenkachse 4 innerhalb des Gehäuses 2 schwenkbar gelagert.

Der Rührwerksantrieb 3 ist entgegen seiner beiden Drehrichtungen (vergleiche Doppelpfeil PF 1) innerhalb des Gehäuses 2 abgestützt. Zur Erfassung von Reaktionskräften dieser beiden Abstützungen weist das Rührgerät 1 eine Messvorrichtung 5 auf. Die Messvorrichtung 5 ist zur Erfassung von Reaktionskräften beider Abstützung eingerichtet.

Dazu weist die Messvorrichtung 5 einen Kraftsensor 6 auf. Der Kraftsensor 6 dient dazu, die Reaktionskräfte beider Abstützungen aufzunehmen und zu messen. Der schwenkbar gelagerte Rührwerksantrieb 3 ist zu diesem Zweck innerhalb des Gehäuses 2 gegen den Kraftsensor 6 abgestützt.

Der Rührwerksantrieb 3 ist zumindest mittelbar derart mit der Messvorrichtung 5 und ihrem Kraftsensor 6 verbunden, dass Reaktionskräfte der Abstützungen des Rührwerksantriebs 3 entgegen beider seiner Drehrichtungen erfassbar sind.

Der Rührwerksantrieb 3 ist an einem schwenkbar gelagerten Haltearm 7 innerhalb des Gehäuses 2 angeordnet. Innerhalb des Haltearms 7 kann ein Getriebe 8 angeordnet sein, beispielsweise mit dem eine von dem Rührwerksantrieb 3 abgegebene Ausgangsdrehzahl durch Übersetzung oder Untersetzung erhöht bzw. verringert werden kann. Das Rührgerät 1 umfasst eine Lagerung 9 mit insgesamt zwei Lagern 10, die im in den Figuren gezeigten Ausführungsbeispiel als Wälzlager ausgebildet sind. Die Lagerung 9 dient zur Schwenklagerung des Rührwerksantriebs 3 innerhalb des Gehäuses 2 des Rührgeräts 1.

Der Kraftsensor 6 der Messvorrichtung 5 ist seinerseits mit einem Sensorarm 11 verbunden. Der Sensorarm 11 weist zwei Kontaktflächen 12 und 13, die zur Abstützung des schwenkbar gelagerten Rührantriebs 3 entgegen seiner beiden Drehrichtungen vorgesehen sind. Die Kontaktflächen 12 und 13 sind dabei an entgegengesetzten Seiten des Sensorarms 11 angeordnet.

Das Rührgerät 1 umfasst ferner ein Kraftübertragungselement 14, das mit den Rührwerksantrieb 3 verbunden ist. Das Kraftübertragungselement 14 dient dazu, die Kontaktflächen 12 und 13 des Sensorarms 11 zur Abstützung entgegen seiner beiden Drehrichtungen des Rührwerksantriebs 3 zu kontaktieren, so den schwenkbar gelagerten Rührwerksantrieb 3 zumindest mittelbar an dem Kraftsensor 6 abzustützen und die dabei entstehenden Reaktionskräfte zur Bestimmung eines Drehmoments auf den Kraftsensor 6 zu übertragen.

Als Kraftsensor 6 kann beispielsweise ein Dehnmessstreifens, ein Drucksensor, ein piezoelektrischer Kraftsensor, ein piezoresistiver Kraftsensor, ein piezoelektrischer Drucksensor, ein kapazitiver Drucksensor, ein Schwingdrahtaufnehmer oder ein elektromagnetischer Druckwandler verwendet werden.

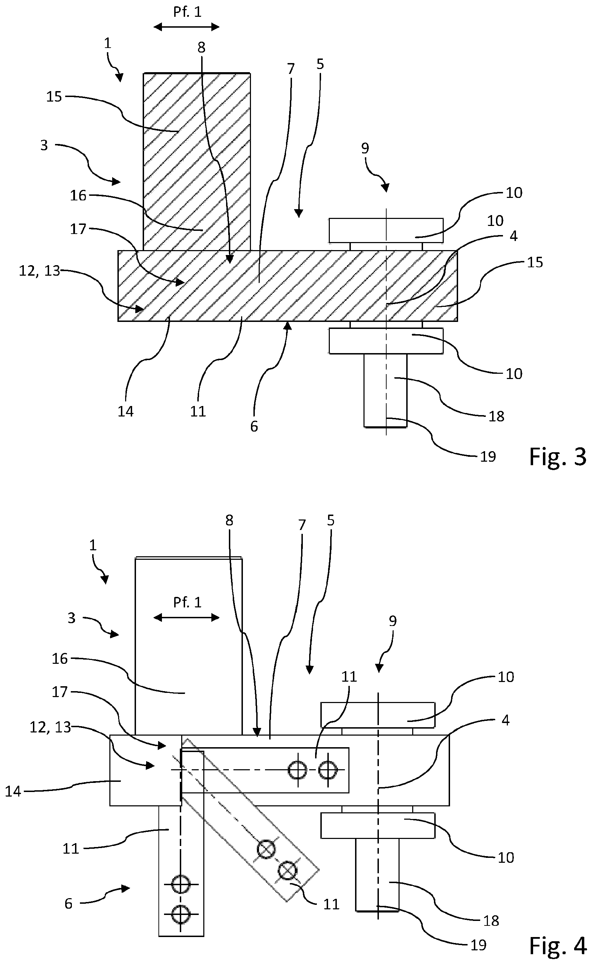

Figur 3 verdeutlicht potentielle Abstützflächen 15 an dem Rührwerksantrieb 3 und dem Haltearm 7, die genutzt werden können, um den Rührwerksantrieb 3 zumindest mittelbar abzustützen. Die Abstützflächen 15 sind schraffiert dargestellt. Figur 4 zeigt eine kleine Auswahl möglicher Anordnungen des Kraftsensors 6 und seines Sensorarms 11 relativ zu dem schwenkbar gelagerten Rührwerksantrieb 3.

Der Rührwerksantrieb 3 ist in dem gezeigten Ausführungsbeispiel als Elektromotor 16 ausgebildet, der mit seiner Abtriebswelle 17 über das Getriebe 8 mit einer Ausgangswelle 18 des Rührgeräts 1 verbunden ist. Die Ausgangswelle 18 des Rührgeräts 1 ist durch die beiden Lager 10 der Lagerung 9 gelagert. Somit wird die Lagerung 9 als sowohl zur Schwenklagerung des Rührwerksantriebs 3 als auch zur Drehlagerung der Ausgangswelle 18 des Rührgeräts 1 verwendet. Eine Rotationsachse 19 der Ausgangswelle 18 ist dadurch deckungsgleich mit der Schwenkachse 4, um die der Rührwerksantrieb 3 innerhalb des Gehäuses 2 schwenkbar gelagert ist.

Bei einer in den Figuren nicht gezeigten Ausführungsform des Rührgeräts 1 ist die Schwenkachse 4, um die der Rührwerksantrieb 3 innerhalb des Gehäuses 2 schwenkbar gelagert ist, nicht deckungsgleich mit einer Rotationsachse einer Ausgangswelle des Rührgeräts 1. Bei einer solchen Ausführungsform des Rührgeräts kann die Schwenkachse 4 beabstandet, insbesondere parallel beabstandet oder windschief, zu der Rotationsachse 19 der Ausgangswelle 18 sein oder die Rotationsachse 19 der Ausgangswelle 18 schneiden.

Der Rührwerksantrieb 3 weist in diesem Fall eine eigene Lagerung auf, die dann als Schwenklagerung ausgebildet sein und bezeichnet werden kann. Bei einer in den Figuren nicht gezeigten Ausführungsform des Rührgeräts 1 kann die Schwenkachse 4, um die der Rührwerksantrieb 3 innerhalb des Gehäuses 2 schwenkbar gelagert ist, durch den Rührwerksantrieb 3 verlaufen und/oder deckungsgleich mit einer Rotationsachse der Abtriebswelle 17 des Rührwerksantriebs 3 sein.

Das Rührgerät 1 kann beispielsweise als Überkopfrührer, als Viskosimeter oder auch als Dispergierer ausgebildet sein.

Die Erfindung befasst sich mit einem Rührgerät 1. Zur Bestimmung eines mit einem Rührwerksantrieb 3 des Rührgeräts in ein zu rührendes Medium einbringbaren Drehmoments weist das Rührgerät 1 eine Messvorrichtung 5 auf. Der Rührwerksantrieb 3 ist innerhalb des Gehäuses 2 des Rührgerätes 1 schwenkbar gelagert und zumindest mittelbar entgegen zumindest einer Drehrichtung seiner beiden Drehrichtungen abgestützt. Mithilfe der Messvorrichtung 5 kann eine Reaktionskraft dieser zumindest einen Abstützung erfasst und daraus das aufgebrachte Drehmoment des Rührwerksantriebs bestimmt werden.

### Bezugszeichenliste

- 1: Rührgerät
- 2: Gehäuse
- 3: Rührwerksantrieb
- 4: Schwenkachse
- 5: Messvorrichtung
- 6: Kraftsensor
- 7: Haltearm
- 8: Getriebe
- 9: Lagerung
- 10: Lager
- 11: Sensorarm
- 12: Kontaktfläche an 11
- 13: Kontaktfläche an 11
- 14: Kraftübertragungselement
- 15: Abstützfläche an 3 und 7
- 16: Elektromotor
- 17: Abtriebswelle von 3
- 18: Ausgangswelle von 1
- 19: Rotationsachse von 18

## Patentansprüche

1. Rührgerät (1) mit einem Gehäuse (2) und mit einem in dem Gehäuse angeordneten Rührwerksantrieb (3), wobei der Rührwerksantrieb (3) zum Messen eines von dem Rührwerksantrieb (3) in ein zu rührendes Medium eingeleiteten Drehmoments um eine Schwenkachse (4) innerhalb des Gehäuses (2) schwenkbar gelagert und zumindest mittelbar entgegen zumindest einer Drehrichtung (Pf. 1) des Rührwerksantriebs (3) abgestützt ist, wobei das Rührgerät (1) eine Messvorrichtung (5) zur Erfassung einer Reaktionskraft dieser Abstützung aufweist.

2. Rührgerät (1) nach Anspruch 1, wobei der Rührwerksantrieb (3) entgegen beider Drehrichtungen (Pf. 1) des Rührwerksantriebs (3) abgestützt ist und/oder wobei die Messvorrichtung (5) zur Erfassung von Reaktionskräften beider Abstützungen eingerichtet ist.

3. Rührgerät (1) nach Anspruch 1 oder 2, wobei die Messvorrichtung (5) zumindest einen Kraftsensor (6) aufweist, mit dem die Reaktionskraft der Abstützung und/oder mit dem die Reaktionskräfte beider Abstützungen messbar ist/sind, insbesondere gegen den der Rührwerksantrieb (3) im Gehäuse (2) abgestützt ist.

4. Rührgerät (1) nach einem der vorherigen Ansprüche, wobei der Rührwerksantrieb (3) zumindest mittelbar derart mit der Messvorrichtung (5), insbesondere mit dem zumindest einen Kraftsensor (6), verbunden ist, dass Reaktionskräfte der Abstützungen des Rührwerksantriebs (3) entgegen beider seiner Drehrichtungen erfassbar sind.

5. Rührgerät (1) nach einem der vorherigen Ansprüche, wobei die Schwenkachse (4) deckungsgleich mit einer Rotationsachse (19) einer Ausgangswelle (18) des Rührgeräts ist, oder wobei die Schwenkachse (4) beabstandet, insbesondere parallel beabstandet oder windschief, zu einer Rotationsachse (19) einer Ausgangswelle (18) des Rührgeräts (1) ist oder wobei die Schwenkachse (4) eine Rotationsachse (19) einer Ausgangswelle (18) des Rührgeräts (1) schneidet.

6. Rührgerät (1) nach einem der vorherigen Ansprüche, wobei die Schwenkachse (4) durch den Rührwerksantrieb (3) verläuft und/oder deckungsgleich mit einer Rotationsachse einer Abtriebswelle (17) des Rührwerksantriebs (3) ist, oder wobei die Schwenkachse (4) beabstandet, insbesondere parallel beabstandet oder windschief, zu einer Rotationsachse einer Abtriebswelle (17) des Rührwerksantriebs (3) ist oder wobei die Schwenkachse (4) eine Rotationsachse einer Abtriebswelle (17) des Rührwerksantriebs (3) schneidet.

7. Rührgerät (1) nach einem der vorherigen Ansprüche, wobei der Rührwerksantrieb (3) an einem, insbesondere um die Schwenkachse (4), schwenkbar gelagerten Haltearm (7) innerhalb des Gehäuses (2) angeordnet ist.

8. Rührgerät (1) nach einem der vorherigen Ansprüche, wobei ein oder der zumindest eine Kraftsensor (6) der Messvorrichtung (5) so, vorzugsweise innerhalb des Gehäuses (2), angeordnet ist, dass der Rührwerksantrieb (3), ein oder der Haltearm (7) und/oder ein mit dem Rührwerksantrieb (3) zumindest zeitweise verbundenes Kraftübertragungselement (14) zumindest mittelbar gegen den zumindest einen Kraftsensor (6) abstützbar ist.

9. Rührgerät (1) nach einem der vorherigen Ansprüche, wobei das Rührgerät (1) eine Lagerung (9) mit zumindest einem Lager (10), insbesondere ein Gleitlager und/oder ein Wälzlager, zur schwenkbaren Lagerung des Rührwerksantriebs (3) um die Schwenkachse (4) aufweist, insbesondere wobei die Lagerung (9) auch eine Drehlagerung einer Ausgangswelle (18) des Rührgeräts (1) bildet.

10. Rührgerät (1) nach einem der vorherigen Ansprüche, wobei ein oder der zumindest eine Kraftsensor (6) der Messvorrichtung (5) mit einem Sensorarm (11) verbunden ist, der zumindest eine Kontaktfläche (12,13) zur Abstützung des schwenkbar gelagerten Rührwerksantriebs (3) entgegen zumindest einer Drehrichtung des Rührwerksantriebs (3) aufweist.

11. Rührgerät (1) nach einem der vorherigen Ansprüche, wobei einem oder dem zumindest einen Kraftsensor (6) der Messvorrichtung (5) zumindest eine Kontaktfläche (12,13) zur Abstützung des schwenkbar gelagerten Rührwerksantriebs (3) entgegen beider Drehrichtungen des Rührwerksantriebs (3) zugeordnet ist, insbesondere wobei dem Kraftsensor (6) zwei Kontaktflächen (12,13) zugeordnet sind, von denen jeweils eine zur Abstützung des Rührwerksantriebs (3) entgegen einer seiner beiden Drehrichtungen vorgesehen ist.

12. Rührgerät (1) nach einem der vorherigen Ansprüche, wobei ein oder der zumindest eine Kraftsensor (6) der Messvorrichtung (5) mit einem Sensorarm (11) verbunden ist, der zumindest eine Kontaktfläche (12,13) zur Abstützung des schwenkbar gelagerten Rührwerksantriebs (3) entgegen beider Drehrichtungen des Rührwerksantriebs (3) aufweist, insbesondere wobei der Sensorarm (11) an zwei unterschiedlichen, vorzugsweise entgegengesetzten, Seiten jeweils eine Kontaktfläche (12,13) aufweist, von denen jeweils eine zur Abstützung des Rührwerksantriebs (3) entgegen einer seiner beiden Drehrichtungen vorgesehen ist.

13. Rührgerät (1) nach einem der vorherigen Ansprüche, wobei der Rührwerksantrieb (3) ein Kraftübertragungselement (14) aufweist, mit dem zumindest eine Kontaktfläche (12,13) eines oder des Kraftsensors (6), insbesondere seines Sensorarms (11), zur Abstützung des entgegen zumindest einer Drehrichtung des Rührwerksantriebs (3) kontaktierbar ist.

14. Rührgerät (1) nach einem der vorherigen Ansprüche, wobei der Rührwerksantrieb (3) und/oder ein oder der Haltearm (7) und/oder ein oder das Kraftübertragungselement (14) zumindest eine Abstützfläche (15) aufweist/aufweisen.

15. Rührgerät (1) nach einem der vorherigen Ansprüche, wobei ein oder der Kraftsensor (6) ein Dehnmessstreifen, ein Drucksensor, ein piezoelektrischer Kraftsensor, ein piezoresistiver Kraftsensor, ein piezoelektrischer Drucksensor, ein kapazitiver Drucksensor, ein Schwingdrahtaufnehmer oder ein elektromagnetischer Druckwandler ist.

16. Rührgerät (1) nach einem der vorherigen Ansprüche, wobei das Rührgerät (1) als Überkopfrührer, als Viskosimeter oder als Dispergierer ausgebildet ist.

## Claims

1. Mixer (1) with a housing (2) and with a mixing device drive (3) arranged in the housing, wherein the mixing device drive (3) for measuring a torque introduced into a medium to be mixed by said mixing device drive (3) is mounted to pivot about a pivot axis (4) within the housing (2), and is supported at least indirectly against at least one rotational direction (Pf. 1) of the mixing device drive (3), wherein the mixer (1) has a measuring device (5) for detecting a reaction force of this support.

2. Mixer (1) according to Claim 1, wherein the mixing device drive (3) is supported against both rotational directions (Pf. 1) of the mixing device drive (3) and/or wherein the measuring device (5) is set up to detect reaction forces of both supports.

3. Mixer (1) according to Claim 1 or 2, wherein the measuring device (5) has at least one force sensor (6) with which the reaction force of the support and/or with which the reaction forces of both supports can be measured, in particular against which the mixing device drive (3) is supported in the housing (2).

4. Mixer (1) according to one of the preceding claims, wherein the mixing device drive (3) is connected to the measuring device (5), in particular to the at least one force sensor (6), at least indirectly, in such a manner that reaction forces of the supports of the mixing device drive (3) can be detected against both of its rotational directions.

5. Mixer (1) according to one of the preceding claims, wherein the pivot axis (4) is congruent with a rotational axis (19) of an output shaft (18) of the mixer, or wherein the pivot axis (4) is spaced apart, in particular spaced in a parallel manner or skewed, from a rotational axis (19) of an output shaft (18) of the mixer (1), or wherein the pivot axis (4) intersects a rotational axis (19) of an output shaft (18) of the mixer (1).

6. Mixer (1) according to one of the preceding claims, wherein the pivot axis (4) runs through the mixing device drive (3) and/or is congruent with a rotational axis of a driven shaft (17) of the mixing device drive (3), or wherein the pivot axis (4) is spaced apart, in particular spaced apart in a parallel manner or skewed, from a rotational axis of a driven shaft (17) of the mixing device drive (3), or wherein the pivot axis (4) intersects a rotational axis of a driven shaft (17) of the mixing device drive (3).

7. Mixer (1) according to one of the preceding claims, wherein the mixing device drive (3) is arranged on a holding arm (7) mounted to pivot, in particular about the pivot axis (4), within the housing (2).

8. Mixer (1) according to one of the preceding claims, wherein one or the at least one force sensor (6) of the measuring device (5) is arranged in such a manner, preferably within the housing (2), that the mixing device drive (3), one or the holding arm (7), and/or a force transmission element (14) connected at least temporarily to the mixing device drive (3) can be supported at least indirectly against the at least one force sensor (6).

9. Mixer (1) according to one of the preceding claims, wherein the mixer (1) has a mounting (9) with at least one bearing (10), in particular a plain bearing and/or a rolling bearing, for the pivotable mounting of the mixing device drive (3) about the pivot axis (4), in particular wherein the mounting (9) also forms a swivel mounting of an output shaft (18) of the mixer (1).

10. Mixer (1) according to one of the preceding claims, wherein one or the at least one force sensor (6) of the measuring device (5) is connected to a sensor arm (11) which has at least one contact surface (12, 13) for supporting the pivotably mounted mixing device drive (3) against at least one rotational direction of the mixing device drive (3).

11. Mixer (1) according to one of the preceding claims, wherein at least one contact surface (12, 13) for supporting the pivotably mounted mixing device drive (3) against both rotational directions of the mixing device drive (3) is assigned to one or the at least one force sensor (6) of the measuring device (5), in particular wherein two contact surfaces (12, 13) are assigned to the force sensor (6), one of which in each case is provided to support the mixing device drive (3) against one of its two rotational directions.

12. Mixer (1) according to one of the preceding claims, wherein one or the at least one force sensor (6) of the measuring device (5) is connected to a sensor arm (11), which has at least one contact surface (12, 13) for supporting the pivotably mounted mixing device drive (3) against both rotational directions of the mixing device drive (3), in particular wherein the sensor arm (11) has a contact surface (12, 13) on each of two different, preferably opposite, sides, one of which is provided, in each case, to support the mixing device drive (3) against one of its two rotational directions.

13. Mixer (1) according to one of the preceding claims, wherein the mixing device drive (3) has a force transmission element (14) with which at least one contact surface (12, 13) of one or the force sensor (6), in particular its sensor arm (11), for supporting against at least one rotational direction of the mixing device drive (3) is contactable.

14. Mixer (1) according to one of the preceding claims, wherein the mixing device drive (3) and/or one or the holding arm (7) and/or one or the force transmission element (14) has/have at least one support surface (15).

15. Mixer (1) according to one of the preceding claims, wherein one or the force sensor (6) is a strain gauge, a pressure sensor, a piezoelectric force sensor, a piezo-resistive force sensor, a piezoelectric pressure sensor, a capacitive pressure sensor, an oscillating wire transducer, or an electromagnetic pressure converter.

16. Mixer (1) according to one of the preceding claims, wherein the mixer (1) is designed as an overhead stirrer, as a viscosimeter, or as a disperser.

## Revendications

1. Mélangeur (1) avec un boîtier (2) et avec un moteur de mélangeur (3), lequel moteur de mélangeur (3) est monté de manière pivotante autour d'un axe de pivotement (4) à l'intérieur du boîtier (2) pour mesurer un couple de rotation introduit par le moteur de mélangeur (3) dans un produit à mélanger et appuyé au moins indirectement à l'encontre d'un sens de rotation (flèche 1) du moteur de mélangeur (3), le mélangeur (1) comprenant un dispositif de mesure (5) pour détecter une force de réaction de cet appui.

2. Mélangeur (1) selon la revendication 1, dans lequel le moteur de mélangeur (3) est appuyé à l'encontre des deux sens de rotation (flèche 1) du moteur de mélangeur (3) et/ou dans lequel le dispositif de mesure (5) est conçu pour détecter les forces de réaction des deux appuis.

3. Mélangeur (1) selon la revendication 1 ou 2, dans lequel le dispositif de mesure (5) comporte au moins un capteur de force (6) avec lequel la force de réaction de l'appui et/ou avec lequel les forces de réaction des deux appuis peut/peuvent être mesurée(s), en particulier contre lequel le moteur de mélangeur (3) dans le boîtier (2) est appuyé.

4. Mélangeur (1) selon une des revendications précédentes, dans lequel le moteur de mélangeur (3) est relié au moins indirectement avec le dispositif de mesure (5), en particulier avec l'au moins un capteur de force (6), de telle sorte que les forces de réaction des appuis du moteur de mélangeur (3) peuvent être détectées à l'encontre de ses deux sens de rotation.

5. Mélangeur (1) selon une des revendications précédentes, dans lequel l'axe de pivotement (4) coïncide avec un axe de rotation (19) d'un arbre de sortie (18) du mélangeur, ou dans lequel l'axe de pivotement (4) est espacé, en particulier espacé parallèlement ou de façon inclinée par rapport à un axe de rotation (19) d'un arbre de sortie (18) du mélangeur (1), ou dans lequel l'axe de pivotement (4) coupe un axe de rotation (19) d'un arbre de sortie (18) du mélangeur (1).

6. Mélangeur (1) selon une des revendications précédentes, dans lequel l'axe de pivotement (4) traverse le moteur de mélangeur (3) et/ou coïncide avec un axe de rotation d'un arbre récepteur (17) du moteur de mélangeur (3), ou dans lequel l'axe de pivotement (4) est espacé, en particulier espacé parallèlement ou de façon inclinée par rapport à un axe de rotation d'un arbre récepteur (17) du moteur de mélangeur (3), ou dans lequel l'axe de pivotement (4) coupe un axe de rotation (19) d'un arbre récepteur (17) du moteur de mélangeur (3).

7. Mélangeur (1) selon une des revendications précédentes, dans lequel le moteur de mélangeur (3) est disposé contre un bras de support (7) logé de façon pivotante, en particulier autour de l'axe de pivotement (4), à l'intérieur du boîtier (2).

8. Mélangeur (1) selon une des revendications précédentes, dans lequel un ou l'au mois un capteur de force (6) du dispositif de mesure (5) est disposé, de préférence à l'intérieur du boîtier (2) de telle sorte que le moteur de mélangeur (3), un ou le bras de support (7) et/ou un élément de transmission de force (14) relié au moins à temps partiel avec le moteur de mélangeur (3) peuvent être appuyés au moins indirectement contre le capteur de force (6).

9. Mélangeur (1) selon une des revendications précédentes, lequel mélangeur (1) comporte un support (9) avec au moins un palier (10), en particulier un palier coulissant et/ou un palier de roulement, pour le support pivotant du moteur de mélangeur (3) autour de l'axe de pivotement (4), en particulier le support (9) constituant aussi un support rotatif d'un arbre de sortie (18) du mélangeur (1).

10. Mélangeur (1) selon une des revendications précédentes, dans lequel un ou l'au mois un capteur de force (6) du dispositif de mesure (5) est relié avec un bras de capteur (11) qui présente au moins une surface de contact (12, 13) pour appuyer le moteur de mélangeur (3) monté de manière pivotante à l'encontre d'au moins un sens de rotation du moteur de mélangeur (3).

11. Mélangeur (1) selon une des revendications précédentes, dans lequel à un ou à l'au moins un capteur de force (6) du dispositif de mesure (5) est associée au moins une surface de contact (12, 13) pour appuyer le moteur de mélangeur (3) monté de manière pivotante à l'encontre des deux sens de rotation du moteur de mélangeur (3), en particulier dans lequel au capteur de force (6) sont associées deux surfaces de contact (12, 13) dont chacune est prévue pour appuyer le moteur de mélangeur (3) à l'encontre d'un de ses deux sens de rotation.

12. Mélangeur (1) selon une des revendications précédentes, dans lequel un ou l'au moins un capteur de force (6) du dispositif de mesure (5) est relié avec un bras de capteur (11) qui comporte au moins une surface de contact (12, 13) pour appuyer le moteur de mélangeur (3) monté de manière pivotante à l'encontre des deux sens de rotation du moteur de mélangeur (3), en particulier dans lequel le bras de capteur (11) comporte sur chacune de deux de ses faces, de préférence opposées, une surface de contact (12, 13) dont chacune est prévue pour appuyer le moteur de mélangeur (3) à l'encontre d'un de ses deux sens de rotation.

13. Mélangeur (1) selon une des revendications précédentes, dans lequel le moteur de mélangeur (3) comporte un élément de transmission de force (14) avec lequel au moins une surface de contact (12, 13) d'un capteur de force (6), en particulier de son bras de capteur (11), peut être mise en contact pour appuyer le (mots manquants) à l'encontre d'au moins un sens de rotation du moteur de mélangeur (3).

14. Mélangeur (1) selon une des revendications précédentes, dans lequel le moteur de mélangeur (3) et/ou un ou le bras de support (7) et/ou un ou l'élément de transmission de force (14) comporte/comportent au moins une surface d'appui.

15. Mélangeur (1) selon une des revendications précédentes, dans lequel un ou le capteur de force (6) est une jauge de contrainte, un capteur de pression, un capteur de force piézoélectrique, un capteur de force piézorésistif, un capteur de pression piézoélectrique, un capteur de pression capacitif, un capteur à fil vibrant ou un transducteur de pression électromagnétique.

16. Mélangeur (1) selon une des revendications précédentes, lequel mélangeur (1) est configuré comme un agitateur de plafond, comme un viscosimètre ou comme un disperseur.
